# EUROPÄISCHE PATENTANMELDUNG

(11) **EP 3 705 749 A1**
(43) Veröffentlichungstag der Anmeldung: **09.09.2020**
(21) Anmeldenummer: 19161074.0
(22) Anmeldetag: 06.03.2019
(51) Int. Cl.: F16H 37/04

(54) **LASTSCHALTGETRIEBE FÜR LANDMASCHINEN**

(71) Anmelder: Deere & Company, Moline, IL 61265 (US)
(72) Erfinder: Müller, David, 68163 Mannheim (DE); Gugel, Dr. Rainer, 68163 Mannheim (DE); Buhrke, Frank, 68163 Mannheim (DE); Schumann, Michael, 68163 Mannheim (DE)
(74) Vertreter: Lavall, Christian Henner

(57) **Zusammenfassung**

Die Erfindung betrifft ein Lastschaltgetriebe für eine Landmaschine mit einem Getriebegehäuse, einer Eingangswelleneinheit und einer Ausgangswelle (61), wobei sich die Eingangswelleneinheit und die Ausgangswelle (61) zumindest abstandsweise innerhalb des Getriebegehäuses erstrecken, wobei eine Nebenwelle (51) parallel versetzt zwischen der Eingangswelleneinheit und der Ausgangswelle (61) innerhalb des Getriebegehäuses angeordnet ist, wobei die Eingangswelleneinheit und die Nebenwelle (51) über eine Vorschaltgruppe (50) und die Nebenwelle (51) und die Ausgangswelle (61) über eine Nachschaltgruppe (60) miteinander in Verbindung stehen, wobei jede Schaltgruppe (50, 60) zumindest zwei einzeln zu- oder abkoppelbare Zahnradpaare aufweist.

## Beschreibung

Die vorliegende Erfindung betrifft ein Lastschaltgetriebe für Landmaschinen.

Bei Lastschaltgetrieben handelt es sich um eine spezielle Form von Fahrzeuggetrieben, bei denen die Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Lastschaltgetriebe durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden können. So werden an Traktoren Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

Diese Getriebe zeichnen sich dadurch aus, dass in einer ersten Schaltung eine mit einer Eingangswelle verbundene Kupplung die Eingangswelle mit der Ausgangswelle verbindet, sodass das Getriebe im Durchtriebsmodus betrieben werden kann, wobei das Planetengetriebe freiläuft. In einer zweiten Schaltung wird die Kupplung gelöst, sodass der Planetenträger durch die Eingangswelle angetrieben wird und sich der Planetensatz um ein durch eine Bremse festgestelltes erstes Sonnenrad wälzt, durch welches sich die Ausgangswelle erstreckt. Der Abtrieb erfolgt über ein zweites mit der Ausgangswelle verbundenes Sonnenrad, welches von dem Planetensatz angetrieben wird. Je nach Zuordnung des Planetensatzes bzw. Ausbildung der Zahnradsätze von Planetensatz und Sonnenrädern kann das Lastschaltgetriebe im Untersetzungsmodus oder im Reversiermodus betrieben werden.

Somit wird ein zweistufiges Lastschaltgetriebe bereitgestellt, welches jedoch zum einen fertigungstechnisch aufwendig ausgebildet ist und zum anderen einen weiteren Betriebsmodus, beispielsweise ein Kriechgangmodus, in der genannten Anordnung nicht zulässt.

In der EP 0 745 198 B1 werden ein Lastschaltgetriebe für mobile Arbeitsmaschinen sowie ein Verfahren zur Steuerung dieses Lastschaltgetriebes beschrieben. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Eingangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

Ausgehend von diesem Stand der Technik, liegt der Erfindung die Aufgabe zugrunde, ein Lastschaltgetriebe anzugeben, dass einerseits mit einer hohen Anzahl von Gang-Varianten bei zugleich kompakter Größe realisierbar ist und dass andererseits für einen breiten Einsatzbereich verwendbar ist.

Diese Aufgabe wird gelöst durch ein Lastschaltgetriebe gemäß Patentanspruch 1.

Erfindungsgemäß weist das Lastschaltgetriebe ein Getriebegehäuse, eine Eingangswelleneinheit und eine Ausgangswelle auf, wobei sich die Eingangswelleneinheit und die Ausgangswelle zumindest abschnittsweise innerhalb des Getriebegehäuses erstrecken, wobei eine Nebenwelle parallel versetzt zwischen der Eingangswelleneinheit und der Ausgangswelle innerhalb des Gehäuses angeordnet ist, wobei die Eingangswelleneinheit und die Nebenwelle über eine Vorschaltgruppe und die Nebenwelle und die Ausgangswelle über eine Nachschaltgruppe miteinander in Verbindung stehen, wobei jede Schaltgruppe zumindest zwei einzelne zu- oder abkoppelbare Zahnradpaare aufweist und wobei die Eingangswelleneinheit aus einer Haupteingangswelle und einer Nebeneingangswelle gebildet ist, die über ein Vorgelege miteinander koppelbar sind.

Mit Zu- bzw. Abkoppeln der einzelnen Zahnradpaare ist im Rahmen dieser Erfindung gemeint, dass die Zahnradpaare entweder miteinander in Eingriff stehen und demnach ein Drehmoment von dem einen Zahnrad auf das andere Zahnrad des Zahnradpaares übertragen werden kann oder dass diese Zahnräder eines Zahnradpaares nicht miteinander in Eingriff stehen. Bei zwei miteinander in Eingriff stehenden Zahnrädern handelt es sich folglich um ein zugekoppeltes Zahnradpaar.

Über die Eingangswelleneinheit kann das Lastschaltgetriebe mit einer Antriebseinheit gekoppelt werden. Eine solche Antriebseinheit kann eine Antriebsmaschine wie zum Beispiel ein Verbrennungsmotor sein. Die Antriebseinheit ist hierbei über die Haupteingangswelle mit dem Lastschaltgetriebe verbunden, sodass hierdurch das eingespeiste Drehmoment über das Lastschaltgetriebe auf die Ausgangswelle übertragen werden kann. An die Ausgangswelle kann dann eine Arbeitsmaschine oder eine Antriebswelle zum Beispiel für Räder angeschlossen werden.

Insgesamt weist das Lastschaltgetriebe zwei Schaltgruppen sowie ein Vorgelege auf. Bei einem Vorgelege handelt es sich um eine Erweiterung des Schaltgetriebes. Dieses setzt sich üblicherweise aus zwei Vorgelege-Zahnradpaaren zusammen. Diese Vorgelege-Zahnradpaare können in verschiedener Art und Weise miteinander in Verbindung stehen und realisieren zumindest in einem Schaltzustand entweder eine Untersetzung oder eine Übersetzung. Letztendlich kann somit mit dem Vorlege zwei Schaltzustände realisiert werden, wobei ein Schaltzustand für einen niedrigen und ein anderer Schaltzustand für einen hohen Lastzustand vorgesehen sind. Aus diesem Grunde werden die Schaltzustände des Vorgeleges in der Regel mit Hi (high) für den hohen Lastzustand und mit Lo (low) für den niedrigen Lastzustand bezeichnet.

Durch das Vorgelege sowie durch die Vorschalt- und die Nachschaltgruppe mit jeweils mindestens zwei Zahnradpaaren und entsprechend mindestens zwei Schaltzuständen lassen sich eine Vielzahl von einzelnen Gangschaltvarianten realisieren. Das Vorgelege ermöglicht hierbei die Übertragung eines Drehmomentes zwischen der Haupteingangswelle und der Nebeneingangswelle, die Vorschaltgruppe eine Drehmoment-Übertragung zwischen der Nebeneingangswelle und der Nebenwelle und die Nachschaltgruppe zwischen der Nebenwelle und der Ausgangswelle.

Dementsprechend ergibt sich die maximale Anzahl von Gangschaltvarianten aus einer Multiplikation der Anzahl der Zahnradpaare der Vorschaltgruppe, der Anzahl der Zahnradpaare der Nachschaltgruppe und der Anzahl der Schaltzustände des Vorgeleges. Bei zumindest zwei Zahnradpaaren in der Vor- und in der Nachschaltgruppe und zwei Schaltzuständen im Vorgelege ergibt sich somit eine maximale Anzahl von acht Gangschaltvarianten. Diese Anzahl kann jedoch in einer einfachen Art und Weise erhöht werden, in dem weitere Zahnradpaare in der Vorschalt- und/oder in der Nachschaltgruppe ergänzt werden.

Bereits eine Erhöhung von einem weiteren Zahnradpaar führt zu zusätzlichen vier Gangschaltvarianten. Durch geringfügige bauliche Änderungen können daher eine Vielzahl von unterschiedlichen Gangschaltvarianten erreicht werden, sodass das Lastgetriebe je nach Anwendung bzw. je nach Typ der Landmaschine individuell angepasst werden kann. Hierzu kann jedoch üblicherweise das Getriebegehäuse sowie auch die vorhandenen Wellen beibehalten werden, da der zusätzliche Eingriff von Zahnradpaaren gemäß einer bevorzugten Ausgestaltung der Erfindung keine diesbezügliche Änderung erfordert.

Dies ist unter anderem darauf zurückzuführen, dass mit relativ wenig Zahnradpaaren bereits eine hohe Anzahl von Gangschaltvarianten erreicht werden kann und durch diese geringe Anzahl von Zahnradpaaren entsprechend nur wenige Kupplungen vorzusehen sind. Bei einem Lastschaltgetriebe ist für jedes Zahnradpaar der Vorschalt- und der Nachschaltgruppe eine eigene Kupplung vorzusehen. Durch die Verwendung eines Vorgeleges kann die Anzahl der Kupplungen gerade bei hohen Gangschaltvarianten reduziert werden, wobei auch das Vorgelege zumindest zwei Kupplungen erfordert.

Bei einer exemplarischen Ausgestaltung mit 32 Gangschaltvarianten weist sowohl die Vorschalt- als auch die Nachschaltgruppe jeweils vier Zahnradpaare auf. Dementsprechend sind zehn Kupplungen für die Realisierung eines solchen Lastschaltgetriebes notwendig. Sofern auf das Vorgelege verzichtet würde, könnte dieselbe Anzahl von Gangschaltvarianten beispielsweise dadurch erreicht werden, dass für die Vorschaltgruppe acht und für die Nachschaltgruppe vier Zahnradpaare vorgesehen sind. Somit wären insgesamt 12 Kupplungen notwendig. Insgesamt kann daher bei einem erfindungsgemäßen Lastschaltgetriebe im Vergleich auf zwei Kupplungen verzichtet werden. Hierdurch ist es möglich, dass die Baugröße des Lastschaltgetriebes sehr kompakt gehalten werden kann. Außerdem steht innerhalb des Getriebegehäuses ein ausreichender Bauraum zur Verfügung, der eine Erhöhung bzw. eine Verringerung der Zahnradpaare in einfacher Art und Weise ermöglicht.

Die Zahnradpaare weisen jeweils ein Antriebszahnrad und ein Abtriebszahnrad auf, wobei das Drehmoment von dem Antriebszahnrad auf das Abtriebszahnrad übertragen wird. In einer bevorzugten Ausgestaltung sind die Antriebszahnräder der Vorschaltgruppe auf der Nebeneingangswelle und die Abtriebszahnräder der Vorschaltgruppe auf der Nebenwelle angeordnet. Bevorzugt sind dementsprechend die Antriebszahnräder der Nachschaltgruppe auf der Nebenwelle und die Abtriebszahnräder der Nachschaltgruppe auf der Ausgangswelle angeordnet.

Aufgrund dieser Vorschaltung weist das Vorgelege in der Regel nur relativ kleine Über- bzw. Untersetzungsverhältnisse auf, sodass entsprechend kleine Kupplungen vorzusehen sind. Die Zahnräder des Vorgeleges auf der Haupteingangswelle und der Nebeneingangswelle können in einfacher Art und Weise verwendet werden, um zusätzliche Antriebseinheiten zu betreiben. Bei derartigen Antriebseinheiten kann es sich beispielsweise um Pumpen, Kompressoren oder Wasserpumpen handeln.

Besonders bevorzugt ist eine solche Ausgestaltung dann, wenn eine Reversiereinheit in das Vorgelege integriert ist. Der Zweck dieser Reversiereinheit besteht darin, die Drehrichtung der Reversiereinheit nachgeschalteten Wellen umzukehren, sodass beispielsweise bei einer Landmaschine eine Rückwärtsfahrt möglich ist. Durch Integration dieser Reversiereinheit in das Vorgelege kann bei einer derartigen Ausgestaltung auf Lastwechsel verzichtet werden. Anstelle einer Reversiereinheit kann alternativ auch ein sogenannter Power-Reverser vorgeschaltet werden.

Für die Ausgestaltung des Vorgeleges haben sich im Rahmen der Erfindung besonders zwei Alternativen als besonders vorteilhaft herausgestellt. Beiden Alternativen sind hierbei gemeint, dass das Vorgelege über ein erstes und ein zweites Vorgelege-Zahnradpaar realisiert ist.

Gemäß einer ersten Alternative ist in einem ersten Schaltzustand des Vorgeleges die Haupteingangswelle unmittelbar mit der Nebeneingangswelle gekoppelt, wobei in einem zweiten Schaltzustand des Vorgeleges die Haupteingangswelle über das erste und das zweite Vorgelege-Zahnradpaar mit der Nebeneingangswelle in Verbindung steht. Somit erfolgt im ersten Schaltzustand keine Über- bzw. Untersetzung über die beiden Zahnradpaare, sondern die Haupteingangswelle und die Nebeneingangswelle sind unmittelbar über eine Kupplung miteinander verbunden. Die beiden Vorgelege-Zahnradpaare stehen dementsprechend nicht miteinander in Eingriff. Sofern in den zweiten Schaltzustand gewechselt wird, erfolgt über die beiden Vorgelege-Zahnradpaare eine "doppelte" Über- bzw. Untersetzung. Im Falle einer Übersetzung stellt der erste Schaltzustand den hohen Lastzustand Hi und der zweite Schaltzustand den niedrigen Lastzustand Lo dar. Dementsprechend ist im Falle einer Übersetzung der erste Schaltzustand der niedrige Lastzustand Lo und der zweite Schaltzustand der hohe Lastzustand Hi.

Eine solche Ausgestaltung wird üblicherweise auch als Drei-Wellen-Anordnung bezeichnet, da die Haupteingangswelle und die Nebeneingangswelle koaxial nebeneinander angeordnet sind, sodass eine direkte Kupplung in einfacher Art und Weise möglich ist. Sowohl die Haupteingangswelle als auch die Nebeneingangswelle weisen hierbei unabhängig vom Schaltzustand die gleiche Drehrichtung auf. Somit erfolgt eine Umkehr der Drehrichtung einerseits zwischen der Eingangswelleneinheit und der Nebenwelle und andererseits zwischen der Nebenwelle und der Ausgangswelle. Entsprechend weisen die Eingangswelleneinheit und die Ausgangswelle die gleiche Drehrichtung auf.

Gemäß einer zweiten Ausgestaltung kann die Drehrichtung der Ausgangswelle gegenüber der Drehrichtung der Haupteingangswelle umgekehrt werden. Diese erfolgt dadurch, dass die Haupteingangswelle in einem ersten Schaltzustand des Vorgeleges über das erste Vorgelege-Zahnradpaar und in einem zweiten Schaltzustand des Vorgeleges über das zweite Vorgelege-Zahnradpaar mit der Nebeneingangswelle in Verbindung steht.

Entsprechend erfolgt somit zwischen der Haupteingangswelle und der Nebeneingangswelle eine Umkehr der Drehrichtung. Eine solche Ausgestaltung wird deshalb auch als Vier-Wellen-Anordnung bezeichnet. Eines der Vorlege-Zahnradpaare ist hierbei übersetzt und das andere Vorlege-Zahnradpaar untersetzt. Es ist aber auch möglich, dass ein Vorgelege-Zahnradpaar so ausgestaltet ist, dass weder eine Über- noch eine Untersetzung erfolgen, sodass lediglich die Drehrichtung umgekehrt wird.

Wie zuvor erläutert, weist jedes Zahnradpaar der Vorschalt- und der Nachschaltgruppe eine eigene Kupplung auf. Hinzu kommen zwei zusätzliche Kupplungen für das Vorgelege. Die Ansteuerung dieser Kupplungen erfolgt bevorzugt über eine hydraulische Ansteuerungsanordnung. Ein weiterer Vorteil dieser Erfindung liegt darin, dass hydraulische Ansteuerungsanordnung unabhängig von der Anzahl der Zahnradpaare bzw. der Gangschaltvarianten stets identisch ist, sodass auch bei einer nachträglichen Anpassung kein Wechsel der hydraulischen Ansteuerungsanordnung erforderlich ist. Bevorzugt sind die Kupplungen der Vorschaltgruppe und der Nachschaltgruppe ausschließlich auf der Nebeneingangswelle und der Ausgangswelle vorgesehen, sodass die Nebenwelle frei von Kupplungen ist. Hierdurch können die einzelnen Wellen möglichst nah aneinander herangeführt werden.

Es liegt aber auch im Rahmen der Erfindung, dass Kupplungen der Vorschaltgruppe sowohl auf der Nebeneingangswelle als auch auf der Nebenwelle angeordnet sind. Entsprechend können auch die Kupplungen der Nachschaltgruppe sowohl auf der Nebenwelle als auch auf der Ausgangswelle angeordnet sein.

Grundsätzlich lässt sich eine Vielzahl von unterschiedlichen Gangschaltvarianten realisieren, wobei bevorzugt die Vorschaltgruppe und/oder die Nachschaltgruppe vier Zahnradpaare aufweisen.

Gegenstand der Erfindung ist auch ein Verfahren zum Durchlaufen eines Lastschaltgetriebes gemäß Patentanspruch 10, wobei das Vorgelege eine erste Schaltebene, die Vorschaltgruppe eine zweite Schaltebene und die Nachschaltgruppe eine dritte Schaltebene definiert, wobei jede Schaltebene zumindest zwei Schaltzustände aufweist und wobei die zweite Schaltebene gegenüber der ersten Schaltebene und die dritte Schaltebene gegenüber der zweiten Schaltebene nachgeordnet sind.

Im Folgend wird die Erfindung anhand eines Ausführungsbeispiels erläutert.

Es zeigen:
Figur 1 Eine schematische Darstellung einer landwirtschaftlichen Arbeitsmaschine,
Figur 2 ein erfindungsgemäßes Lastschaltgetriebe mit 32 Gangschaltvarianten,
Figur 3 eine alternative Ausgestaltung des Lastschaltgetriebes gemäß Fig. 2,
Figur 4 ein bevorzugtes Schaltprinzip des erfindungsgemäßen Lastschaltgetriebes.

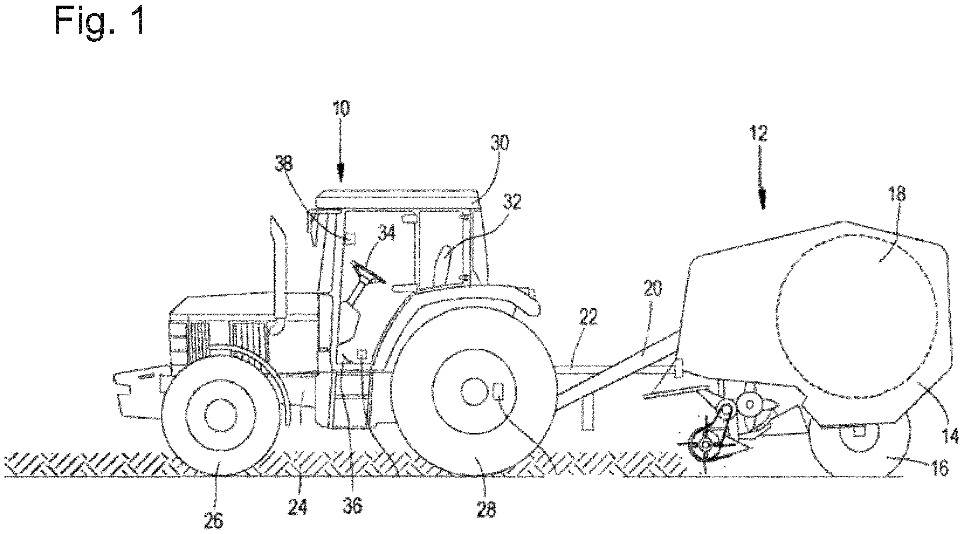

Die Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

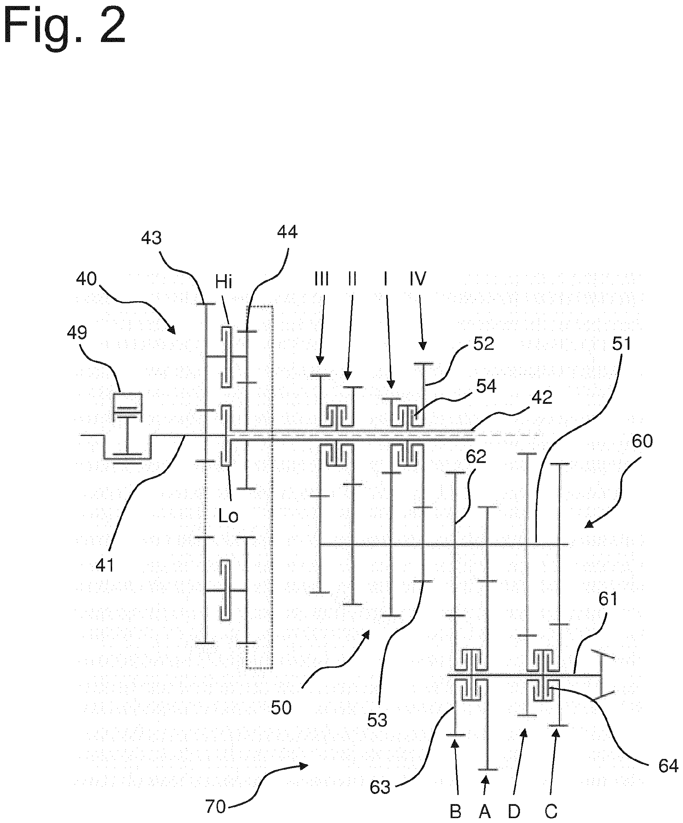

Die Figur 2 zeigt ein schematisches Schaubild des erfindungsgemäßen Lastschaltgetriebes. Das Lastschaltgetriebe weist eine Eingangswelleneinheit bestehend aus einer Haupteingangswelle 41 und einer Nebeneingangswelle 42 sowie eine Ausgangswelle 61 auf. Zwischen der Eingangswelleneinheit und der Ausgangswelle 61 ist eine Nebenwelle 51 parallel versetzt angeordnet. An der Haupteingangswelle 41 ist eine Arbeitsmaschine 49 vorgesehen, die ein Drehmoment auf die Haupteingangswelle 41 überträgt. Dieses Drehmoment wird von der Haupteingangswelle 41 über ein Vorgelege 40 auf die Nebeneingangswelle 42 übertragen, wobei zwischen der Nebeneingangswelle 42 und der Nebenwelle 51 eine Drehmoment-Übertragung über die Vorschaltgruppe 50 erfolgt. Ausgehend von der Nebenwelle 51 erfolgt dann eine Drehmoment-Übertragung über eine Nachschaltgruppe 60 auf die Ausgangswelle 61.

In dem exemplarisch gezeigten Ausführungsbeispiel verfügt die Vorschaltgruppe 50 über insgesamt vier Zahnradpaare I, II, III und IV bestehend jeweils aus einem Antriebszahnrad 52 und einem Abtriebszahnrad 53, die über eine Kupplung 54 miteinander in Eingriff gebracht werden kann. Diese vier Zahnradpaare I, II, III und IV zeichnen sich durch unterschiedliche Übersetzungsverhältnisse aus. Beispielsweise weist das Zahnradpaar I ein relativ kleines Antriebszahnrad 52 und ein großes Abtriebszahnrad 53 auf. Sofern diese Zahnräder miteinander in Eingriff stehen, wird die Drehzahl des Abtriebszahnrades 53 verringert und zugleich das Drehmoment erhöht. Im Vergleich dazu weist das Zahnradpaar IV ein größeres Antriebszahnrad 52 und ein kleineres Abtriebszahnrad 53 auf, wodurch die Drehzahl des Abtriebszahnrades 53 erhöht und das Drehmoment verringert wird.

Zur Übertragung des Drehmomentes von der Eingangswelleneinheit auf die Nebenwelle 51 sind die Antriebszahnräder 52 der Vorschaltgruppe 50 auf der Nebeneingangswelle 52 und die Abtriebszahnräder 53 auf der Nebenwelle 51 angeordnet. Die Kupplungen der Vorschaltgruppe 50 sind ausschließlich auf der Nebeneingangswelle 42 angeordnet, wobei es natürlich auch im Rahmen der Erfindung liegt, sowohl auf der Nebeneingangswelle 42 als auch auf der Nebenwelle 51 Kupplungen 54 vorzusehen. Bei einer ausschließlichen Anordnung auf der Nebeneingangswelle 42 sind diese Kupplungen in einer sogenannten Back-To-Back-Anordnung angeordnet, wobei sich jeweils zwei der Kupplungen 54 zwischen zwei der Zahnradpaare I, II, III und IV der Vorschaltgruppe 50 befinden.

Zwischen der Haupteingangswelle 41 und der Nebeneingangswelle 42 ist ein Vorgelege 40 angeordnet, über das die Haupteingangswelle 41 mit der Nebeneingangswelle 42 in Verbindung steht. Das Vorgelege 40 weist eine Kupplung Hi auf, über die die Haupteingangswelle 41 unmittelbar mit der Nebeneingangswelle 42 gekoppelt werden kann. Hierzu sind die beiden Eingangswellen 41, 42 nebeneinander und koaxial zueinander angeordnet, wobei die Kupplung Hi eine unmittelbare Drehmoment-Übertragung ermöglicht, sodass sowohl das übertragene Drehmoment als auch die Drehzahl nach Einkupplung unverändert bleiben. Eine solche Verbindung stellt einen ersten Schaltzustand des Vorgeleges 40 dar, der einen hohen Lastzustand beschreibt.

In einem zweiten Schaltzustand des Vorgeleges 40 steht die Haupteingangswelle 41 über ein erstes und ein zweites Vorgelege-Zahnradpaar 43, 44 mit der Nebeneingangswelle 42 in Verbindung. Hierbei kann das Abtriebszahnrad des ersten Vorgelege-Zahnradpaares 43 über eine Kupplung Lo mit dem Antriebszahnrad des zweiten Vorgelege-Zahnradpaares 44 gekoppelt werden. Das Antriebszahnrad des ersten Vorgelege-Zahnradpaares 43 ist hierbei auf der Haupteingangswelle 41 und das Abtriebszahnrad des zweiten Vorgelege-Zahnradpaares 44 auf der Nebeneingangswelle 42 angeordnet. Beide Vorgelege-Zahnradpaare 43, 44 sind hierbei derart ausgestaltet, dass eine Übersetzung einer Reduzierung der Drehzahl und der Erhöhung des Drehmomentes erfolgt. Der zweite Schaltzustand definiert einen niedrigen Lastzustand.

Unabhängig von dem Schaltzustand des Vorgeleges 40 weisen die Eingangswellen 41, 42 stets die gleiche Drehrichtung auf, die gegenüber der Ausgangswelle 61 umgekehrt ist.

Die Übertragung des Drehmomentes von der Nebenwelle 51 auf die Ausgangswelle 61 erfolgt über eine Nachschaltgruppe 60. Hierzu sind die Antriebszahnräder 62 auf der Nebenwelle 51 und die Abtriebszahnräder 63 auf der Ausgangswelle 61 angeordnet.

Auch die Nachschaltgruppe 60 verfügt über vier Zahnradpaare A, B, C und D. Die Anzahl der Gangschaltvarianten ergibt sich nunmehr aus einer Multiplikation der Zahnradpaare der Vorschaltgruppe 50, der Nachschaltgruppe 60 und den Schaltzuständen des Vorgeleges 40. Insgesamt sind somit 32 Gänge realisierbar. Durch Entnahme beispielsweise des Zahnradpaares IV und des Zahnradpaares D verringert sich die Anzahl der Gangschaltvarianten auf nur noch 18.

Auch die einzelnen Zahnradpaare A, B, C und D der Nachschaltgruppe 60 sind über jeweils zugeordnete Kupplungen 64 zu- bzw. abkoppelbar, wobei in dem gezeigten Beispiel alle Kupplungen 64 auf der Ausgangswelle 61 angeordnet sind. Somit ist die Nebenwelle 51 frei von Kupplungen 54, 64. Die Anordnung der Kupplungen 64 entspricht wie der bereits zuvor erläuterten Anordnung der Kupplungen 54 der Vorschaltgruppe auf der Nebeneingangswelle.

Darüber hinaus verfügt das Lastschaltgetriebe über eine Reversiereinheit 70, die in das Vorgelege 50 integriert ist.

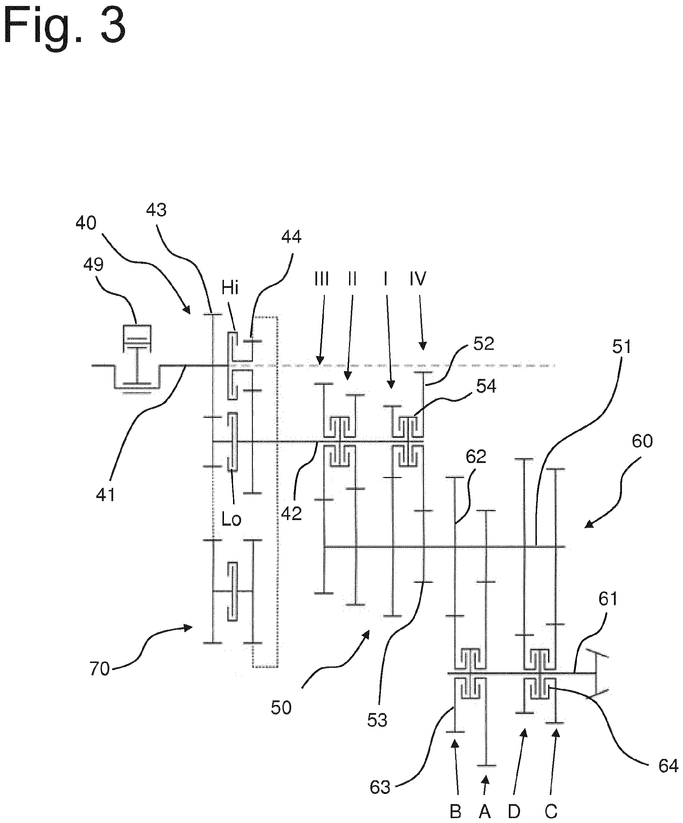

Die Figur 3 zeigt eine alternative Ausgestaltung des Lastschaltgetriebes gemäß der Figur 2, die sich in der Ausgestaltung des Vorgeleges 40 unterscheidet. Im Gegensatz zu der Figur 2 sind die Haupteingangswelle 51 und die Nebeneingangswelle 52 nicht unmittelbar miteinander koppelbar. Vielmehr wird ein erster Schaltzustand über das erste Vorgelege-Zahnradpaar 43 und ein zweiter Schaltzustand über das zweite Vorgelege-Zahnradpaar 44 realisiert. Das erste Vorgelege-Zahnradpaar 43 kann hierbei über die Kupplung Lo eingekoppelt werden und definiert einen niedrigen Lastzustand, während das zweite Vorgelege-Zahnradpaar 44 über die Kupplung Hi angekoppelt wird und einen hohen Lastzustand definiert. Die übrigen Komponenten sind analog zu dem Lastschaltgetriebe gemäß der Figur 2 ausgebildet. Insbesondere verfügt auch hier die Vorschaltgruppe 50 über vier Zahnradpaare I, II, III und IV oder auch die Nachschaltgruppe 60 über vier Zahnradpaare A, B, C und D.

Der wesentliche Unterschied zu dem Lastschaltgetriebe gemäß der Figur 2 besteht darin, dass zwischen der Haupteingangswelle 41 und der Nebeneingangswelle 42 eine Umkehr der Drehrichtung erfolgt. Insgesamt erfolgt somit sowohl über die Vorschaltgruppe 50, als auch über das Vorgelege 40 und die Nachschaltgruppe 60 eine Umkehr der Drehrichtung, sodass die Ausgangswelle 61 eine gegenüber der Haupteingangswelle 41 umgedrehte Drehrichtung aufweist. Bei einer Ausgestaltung gemäß der Figur 2 weisen die Haupteingangswelle 41 und die Ausgangswelle 61 die gleiche Drehrichtung auf.

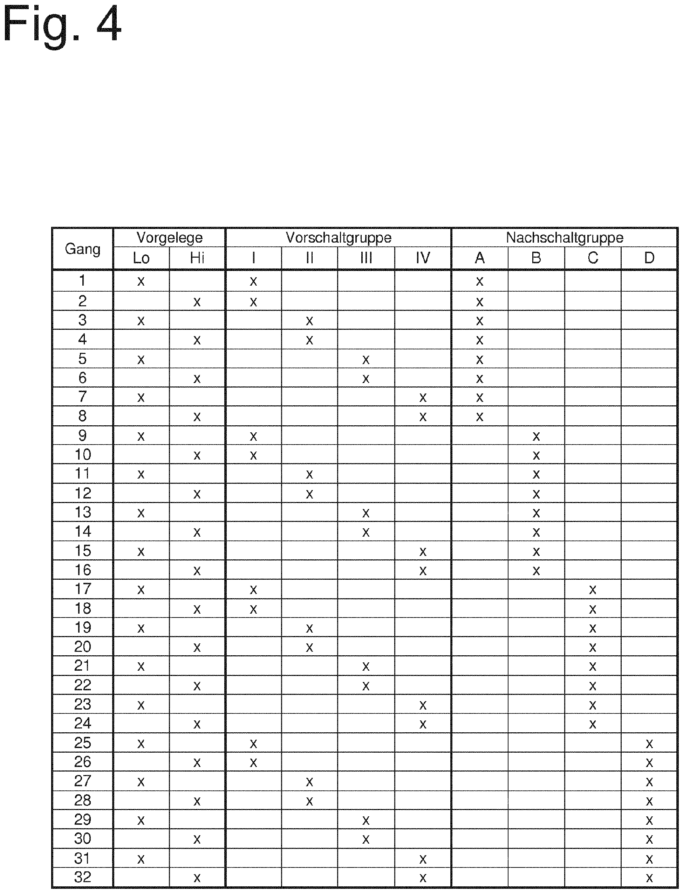

Die Figur 4 zeigt ein bevorzugtes Schaltprinzip des Lastschaltgetriebes. Es wird gezeigt, wie das Lastschaltgetriebe durchlaufen werden soll, um von einer niedrigen Gangschaltvariante möglichst kontinuierlich in eine hohe Gangschaltvariante übergehen zu können. Hierbei bildet das Vorgelege 40 eine erste Schaltebene, die Vorschaltgruppe 50 eine zweite Schaltebene und die Nachschaltgruppe 60 eine dritte Schaltebene.

Zunächst wird die Vorschaltgruppe 50 auf das Zahnradpaar I, das Vorgelege 40 in den Schaltzustand Lo und die Nachschaltgruppe 60 auf das Zahnradpaar A geschaltet. Zur Erhöhung des Ganges wird nunmehr zunächst das Vorgelege 40 in den Schaltzustand Hi gebracht, während sowohl die Vorschaltgruppe 50 als auch die Nachschaltgruppe 60 unverändert bleibt. Zur weiteren Erhöhung wird dieser vor allem dann bei einer nacheinander geschalteten Erhöhung der Vorschaltgruppe 50 wiederholt, bis alle Zahnradpaare I, II, III und IV der Vorschaltgruppe 50 durchlaufen wurden.

In einem weiteren Schritt werden dann die Zahnradpaare A, B, C und D der Nachschaltgruppe 60 nacheinander durchgeschaltet, wobei für jedes Zahnradpaar A, B, C und D der Nachschaltgruppe 60 das zuvor erläuterte Schaltprinzip wiederholt wird.

## Patentansprüche

1. Lastschaltgetriebe für eine Landmaschine mit einem Getriebegehäuse, einer Eingangswelleneinheit und einer Ausgangswelle (61),
wobei sich die Eingangswelleneinheit und die Ausgangswelle (61) zumindest abstandsweise innerhalb des Getriebegehäuses erstrecken,
wobei eine Nebenwelle (51) parallel versetzt zwischen der Eingangswelleneinheit und der Ausgangswelle (61) innerhalb des Getriebegehäuses angeordnet ist,
wobei die Eingangswelleneinheit und die Nebenwelle (51) über eine Vorschaltgruppe (50) und die Nebenwelle (51) und die Ausgangswelle (61) über eine Nachschaltgruppe (60) miteinander in Verbindung stehen,
wobei jede Schaltgruppe (50, 60) zumindest zwei einzeln zu- oder abkoppelbare Zahnradpaare aufweist und
wobei die Eingangswelleneinheit aus einer Haupteingangswelle (41) und einer Nebeneingangswelle (42) gebildet ist, die über eine Vorgelege (40) miteinander koppelbar sind.

2. Lastschaltgetriebe nach Anspruch 1, wobei das Vorgelege (40) ein erstes und ein zweites Vorgelege-Zahnradpaar (43, 44) aufweist.

3. Lastschaltgetriebe nach Anspruch 2, wobei die Haupteingangswelle (41) mit einer Antriebseinheit koppelbar ist und in einem ersten Schaltzustand des Vorgeleges (40) die Haupteingangswelle (41) unmittelbar mit der Nebeneingangswelle (42) gekoppelt ist und in einem zweiten Schaltzustand des Vorgeleges (40) die Haupteingangswelle (41) über das erste und das zweite Vorgelege-Zahnradpaar (43, 44) mit der Nebeneingangswelle (42) in Verbindung steht.

4. Lastschaltgetriebe nach Anspruch 2, wobei die Haupteingangswelle (41) mit einer Antriebseinheit koppelbar ist und die Haupteingangswelle (41) in einem ersten Schaltzustand des Vorgeleges (40) über das erste Vorgelege-Zahnradpaar (43) und in einem zweiten Schaltzustand des Vorgeleges (40) über das zweite Vorgelege-Zahnradpaar (44) mit der Nebeneingangswelle (42) in Verbindung steht.

5. Lastschaltgetriebe nach einem der Ansprüche 1 bis 4, wobei Antriebszahnräder (52) der Vorschaltgruppe (50) auf der Nebeneingangswelle (51) und Abtriebszahnräder (53) der Vorschaltgruppe (50) auf der Nebenwelle (51) angeordnet sind.

6. Lastschaltgetriebe nach einem der Ansprüche 1 bis 5, wobei Antriebszahnräder (62) der Nachschaltgruppe (60) auf der Nebenwelle (51) und Abtriebszahnräder (63) der Nachschaltgruppe (60) auf der Ausgangswelle (61) angeordnet sind.

7. Lastschaltgetriebe nach einem der Ansprüche 1 bis 6, wobei jedes Zahnradpaar der Vor- und der Nachschaltgruppe (50, 60) eine separat zugeordnete Kupplung (54, 64) aufweist und wobei die Kupplungen (54, 64) der Vor- und der Nachschaltgruppe (50, 60) ausschließlich auf der Nebeneingangswelle (42) und der Ausgangswelle (61) angeordnet sind, sodass die Nebenwelle (51) frei von Kupplungen ist.

8. Lastschaltgetriebe nach einem der Ansprüche 1 bis 7, wobei die Drehrichtung der Ausgangswelle (61) über eine Reversiereinheit (70) umgekehrt werden kann, wobei die Reversiereinheit (70) in das Vorgelege (40) integriert ist.

9. Lastschaltgetriebe nach einem der Ansprüche 1 bis 8, wobei die Vorschaltgruppe (50) und/oder die Nachschaltgruppe (60) vier Zahnradpaare aufweist.

10. Verfahren zum Durchlaufen eines Lastschaltgetriebes nach einem der Ansprüche 1 bis 9,
wobei das Vorgelege (40) eine erste Schaltebene, die Vorschaltgruppe (50) eine zweite Schaltebene und die Nachschaltgruppe (60) eine dritte Schaltebene definiert,
wobei jede Schaltebene zumindest zwei Schaltzustände aufweist und
wobei die zweite Schaltebene gegenüber der ersten Schaltebene und die dritte Schaltebene gegenüber der zweiten Schaltebene nachgeordnet sind.
